# EUROPÄISCHE PATENTANMELDUNG

(11) **EP 0 553 695 A2**
(43) Veröffentlichungstag der Anmeldung: **04.08.1993**
(21) Anmeldenummer: 93100763.7
(22) Anmeldetag: 20.01.1993
(51) Int. Cl.: B29C 67/22, B05C 5/02, B29K 75/00

(54) **Auftragsvorrichtung für Mehrkomponenten-Kunststoffe, insbesondere Polyurethan**

(30) Priorität: 31.01.1992 DE 4202736
(71) Anmelder: Siempelkamp Handling Systeme GmbH & Co., D-82515 Wolfratshausen (DE)
(72) Erfinder: Kittlaus, Volker, W-8000 München 70 (DE); Ihbe, Joerg, W-8035 Gauting (DE)
(74) Vertreter: Masch, Karl Gerhard, Dr.

(57) **Zusammenfassung**

Die Auftragsvorrichtung für Mehrkomponenten-Kunststoffe, insbesondere Polyurethan, auf eine kontinuierliche Deckschicht, vorzugsweise in einer Doppelbandanlage, weist ein Portal auf, das über die Deckschicht und quer zur Bewegungsrichtung verläuft. An dem Portal ist ein Mischkopf (11) mit mindestens zwei Austragsdüsen (12 bis 14) hin- und herbewegbar. Wenn die Standzeit der einen Austragsdüse durch Zuwachsen mit Reaktionsgemisch abgelaufen ist, kommt die nächste Austragsdüse ohne Unterbrechung des Mischvorganges (Nullüberdeckung) zum Einsatz. Hierdurch wird sichergestellt, daß der Produktionsprozeß über einen langen Zeitraum, beispielsweise eine Schicht, nicht unterbrochen werden muß, und daß während der gesamten Produktionszeit ein gleichmäßiges, einheitliches Produkt hergestellt wird. Grundsätzlich ist es möglich, zum Umschalten den Mischkopf (11) relativ zu den Austragsdüsen (12 bis 14) oder umgekehrt, die Austragsdüsen relativ zu dem Mischkopf, zu bewegen.

## Beschreibung

Die Erfindung betrifft eine Auftragsvorrichtung nach dem Oberbegriff des Patentanspruches 1.

Derartige Auftragsvorrichtungen sind in Verbindung mit Doppelbandanlagen in verschiedenen Ausgestaltungen bekannt. Grundsätzlich ist ein ortsfestes Portal vorhanden, das nach Art einer Brücke ausgebildet ist und quer über die bewegte Deckschicht, d.h. senkrecht zur Bewegungsrichtung der Deckschicht, verläuft. An diesem Portal ist die Auftragsvorrichtung, bestehend aus Mischkopf und Austragsdüse, hin- und herbewegbar, um eine gleichmäßige Beschichtung über die gesamte Deckschichtbreite sicherzustellen. Die Austragsdüsen können in der unterschiedlichsten Weise ausgebildet sein, z.B. so, wie in der DE-PS 27 26 360 beschrieben oder als einfaches Austragsrohr mit einer Vielzahl auf die zu beschichtende Deckschicht gerichteten Austrittsöffnungen.

Die Anlagen, d.h. vorzugsweise die Doppelbandanlagen, in Verbindung mit denen derartige Auftragsvorrichtungen eingesetzt werden, arbeiten kontinuierlich, häufig über den Zeitraum einer Schicht (z.B. acht Stunden), ohne Unterbrechung. Die Standzeit der meisten zum Einsatz kommenden Austragsdüsen ist für einen derartigen langen Betrieb nicht ausreichend, d.h. die Düsen wachsen langsam zu, so daß sie ausgewechselt werden müssen. Dieses ist bei bekannten Düsen beispielsweise nach etwa drei Stunden der Fall. Der Betrieb der Anlage muß dann unterbrochen werden. Dieses bedeutet nicht nur eine Unterbrechung der Produktion, sondern führt auch zu Anfahr- und Einstellproblemen.

In der jüngsten Vergangenheit sind Gießrohre, sog. "Gießharken" vermehrt eingesetzt worden, da sie sich insbesondere in Verbindung mit FCKW-reduzierten oder FCKW-freien Schäumen gut eignen. Diese Gießharken beanspruchen auch einen verhältnismäßig geringen Platz, d.h. sie können zwischen den Deckschichten relativ nahe an das Doppelband herangefahren werden. Diese Gießharken neigen aber zum Zuwachsen, d.h. ihre Standzeit ist nicht besonders hoch.

Es ist auch schon vorgeschlagen worden, Auftragsvorrichtungen einzusetzen, bei denen an dem Portal zwei unabhängig voneinander arbeitende Mischköpfe mit je einer Austragsdüse angeordnet sind. Es kann dann immer die Einheit zum Einsatz kommen, die betriebsbereit ist. Die andere kann gereinigt werden. Wenn der Übergang von der einen auf die andere Austragsvorrichtung erfolgt, beispielsweise bei in Längsrichtung der Deckschichten hintereinander angeordneten Düsen, so muß das Portal in Bewegungsrichtung der Deckschicht verfahren werden, um eine Unterbrechung der Beschichtung auf der Deckschicht zu vermeiden. Eine derartige Konstruktion ist daher sehr aufwendig und kostenverursachend.

Der Erfindung liegt die Aufgabe zugrunde, eine Auftragsvorrichtung der eingangs genannten Art zu schaffen, die eine lange Standzeit aufweist, d.h. die einen Betrieb über einen längeren Zeitraum, beispielsweise über eine achtstündige Schicht, ohne Unterbrechung ermöglicht.

Diese Aufgabe wird grundsätzlich durch das Kennzeichen des Patentanspruches 1 gelöst.

Erfindungsgemäß ist an dem Portal nur eine Auftragsvorrichtung vorgesehen, die einen Mischkopf aufweist. Für diesen Mischkopf sind mehrere, beispielsweise drei Austragsdüsen vorgesehen, die wahlweise zum Einsatz gebracht werden können. Wenn die Standzeit der einen Austragsdüse beendet ist, d.h. wenn diese durch Reaktionsgemisch zugewachsen ist, wird die nächste Austragsdüse zum Einsatz gebracht, ohne daß eine Unterbrechung des Betriebes und der Produktion erforderlich ist. Hierbei erfolgt das Umschalten so schnell, daß eine Unterbrechung des Mischvorgangs nicht stattfindet (sog. Null-Überdeckung). Die Qualität des erzeugten Reaktionsproduktes wird also nicht beeinflußt.

Je nach dem, welche Standzeit die Austragsdüsen aufweisen und welcher Produktionszeitraum ohne Unterbrechung erwünscht ist, wird die Zahl der Austragsdüsen ausgewählt.

Es ist möglich, die Umschaltung, d.h. die Wechselvorrichtung, in der unterschiedlichsten Weise auszubilden, insbesondere so, wie in den Ansprüchen 2 bis 4 angegeben. Hierbei ist es nicht erforderlich, daß sämtliche Austragsdüsen identisch gestaltet sind. Es ist beispielsweise möglich, diese so, wie in Anspruch 5 definiert, auszubilden.

Auch ist es möglich, die Austragsdüsen als Wegwerfteile aus Kunststoff (Anspruch 6) zu gestalten.

Insbesondere hat sich in Verbindung mit der Auftragsvorrichtung nach der Erfindung eine sog. "Gießharke", wie sie in Anspruch 7 definiert ist, bewährt.

Im folgenden wird die Erfindung unter Hinweis auf die Zeichnung anhand eines Ausführungsbeispieles näher erläutert

Es zeigt:
- Figur 1: eine schematische Seitenansicht einer Doppelbandanlage mit einer Auftragsvorrichtung nach der Erfindung und
- Figur 2: eine schematische Ansicht einer Ausführungsform einer Auftragsvorrichtung nach der Erfindung in einer Ansicht von unten.

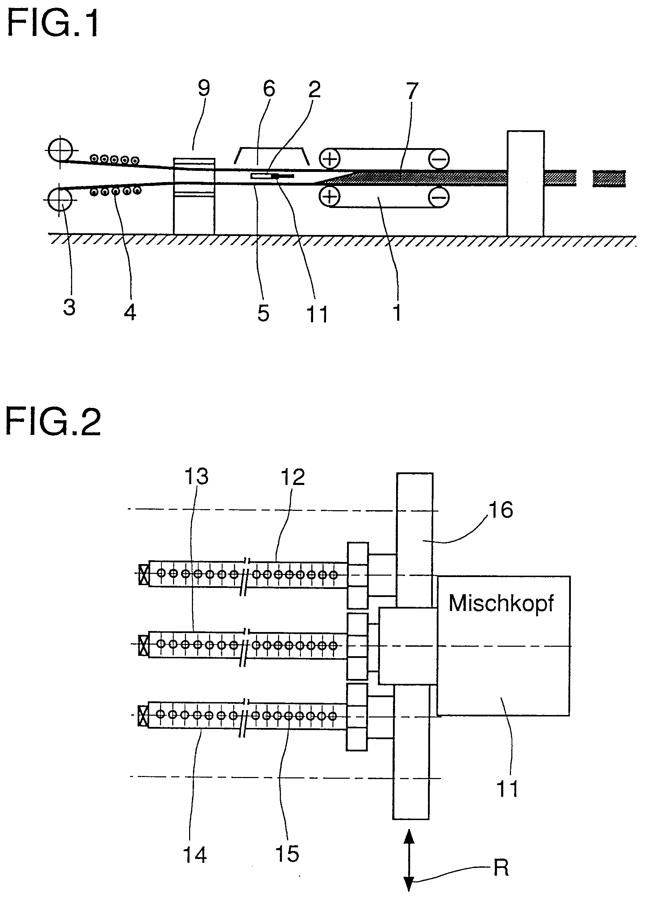

In der Fig. 1 dargestellten Anlage ist das Herzstück, nämlich das Doppelband, mit 1 bezeichnet. Dieses weist zwei übereinander angeordnete Fördertrume auf, die den Formhohlraum zwischen sich begrenzen.

In diesen Formhohlraum, in dem das bei 7 angedeutete Aufschäumen stattfindet, werden eine obere und eine untere Deckschicht eingeführt. Diese Deckschichten laufen von Vorratsspulen 3 ab. Wenn es sich um Bleche handelt, können diese bei 4 profilieret und bei 9 vorgeheizt werden. Die auf diese Weise profilierten Deckschichten sind mit 5 (untere Deckschicht) und mit 6 (obere Deckschicht) bezeichnet. Das Portal 2 verläuft quer zur Bewegungsrichtung der Deckschichten und ist zwischen diesen am Eingang des Doppelbandes 1 angeordnet. An dem Portal ist ein Mischkopf 11 quer zur Bewegungsrichtung der Deckschichten hin- und herbewegbar. An dem Mischkopf 11 sind, wie in Fig. 2 dargestellt, drei Austragsdüsen (12 bis 14) angeordnet, die als einfache Gießrohre mit auf die untere Deckschicht 5 gerichteten Austrittsöffnungen 15 ausgebildet sind. Diese Ausführungsform der Gießrohre bezeichnet man auch als "Gießharke". Es sind aber auch andere Austragsdüsen an dieser Stelle verwendbar.

Um die einzelnen Austragsdüsen zum Einsatz zu bringen, ist es möglich, einen Kalter 16 gegenüber dem Mischkopf 11 zu bewegen und die Austrittsöffnung des Mischkopfes mit der entsprechenden Eintrittsöffnung der Austragsdüse (12, 13, 14) in Übereinstimmung zu bringen. Diese Art der Umschaltung ist durch den Doppelpfeil R angedeutet.

Es ist grundsätzlich eine Lösung denkbar, die ohne Halter 16 auskommt und bei der die Austragsdüsen unmittelbar mit dem Mischkopf 11 verbunden sind und relativ zu diesem bewegt werden.

Es sind auch noch andere Möglichkeiten denkbar, um das PUR-Gemisch den einzelnen Austragsdüsen zuzuführen, beispielsweise durch Ventile, Schieber oder dergleichen.

Wenn im Betrieb die eine Austragsdüse 13 ihre Standzeit erreicht hat, d.h. soweit zugewachsen ist, daß ein zufriedenstellender Betrieb nicht mehr möglich ist, ergeht ein entsprechendes Signal und es erfolgt ein sehr schneller Wechsel auf die nächste Austragsdüse, beispielsweise 14, ohne daß eine Unterbrechung des Mischvorganges stattfindet. Dieser Wechsel erfolgt also nach Art einer Nullüberdeckung, so daß gewährleistet ist, daß keine Unterbrechung der Beschichtung der unteren Deckschicht stattfindet, und auch die Art und Zusammensetzung des Gemisches nicht beeinflußt wird.

Die Austragsvorrichtung ist einfach aufgebaut und sie weist so viele Austragsdüsen auf, daß ein Wechsel der gesamten Austragsdüseneinheit erst nach Beendigung eines Produktionsprozesses, beispielsweise nach einer Schicht, erforderlich ist. Die Austragsdüsen können auch aus Kunststoff als Wegwerfteile hergestellt sein.

## Patentansprüche

1. Auftragsvorrichtung für Mehrkomponenten-Kunststoffe, insbesondere Polyurethan, auf eine kontinuierlich bewegte Deckschicht, vorzugsweise in einer Doppelbandanlage, mit einem über der Deckschicht quer zur Bewegungsrichtung angeordneten Portal, an dem ein Mischkopf mit einer Austragsdüse hin- und herbewegbar ist, dadurch gekennzeichnet, daß an dem Mischkopf (11) mindestens zwei Austragsdüsen (12 bis 14) angebracht sind, die wahlweise einsetzbar sind.

2. Auftragsvorrichtung nach Anspruch 1, dadurch gekennzeichnet, daß die Austragsdüsen (12 bis 14) zum Umschalten von der einen auf die andere Austragsdüse relativ zu dem Mischkopf (11) bewegbar sind.

3. Auftragsvorrichtung nach Anspruch 1, dadurch gekennzeichnet, daß zwischen dem Mischkopf (11) und den Austragsdüsen (12 bis 14) ein Halter 16 vorgesehen ist, der mit den Austragsdüsen relativ zum Mischkopf bewegbar ist.

4. Auftragsvorrichtung nach Anspruch 1, dadurch gekennzeichnet, daß zum Umschalten von der einen auf die andere Austragsdüse (12 bis 14) Ventile, Schieber oder dergleichen vorgesehen sind.

5. Auftragsvorrichtung nach einem oder mehreren der vorstehenden Ansprüche, dadurch gekennzeichnet, daß die Austragsdüsen (12 bis 14) für verschiedene Austragsleistungen unterschiedlich dimensioniert sind.

6. Auftragsvorrichtung nach einem oder mehreren der vorstehenden Ansprüche, dadurch gekennzeichnet, daß die Austragsdüsen (12 bis 14) als Wegwerfteile ausgebildet sind.

7. Auftragsvorrichtung nach einem oder mehreren der vorstehenden Ansprüche, dadurch gekennzeichnet, daß die Austragsdüsen (12 bis 14) als Gießrohre mit einer Vielzahl auf die bewegte Deckschicht (5) gerichteten Austrittsöffnungen (15) ausgebildet sind.
